# EUROPÄISCHE PATENTSCHRIFT

(11) **EP 2 711 601 B1**
(45) Veröffentlichungstag und Bekanntmachung des Hinweises auf die Patenterteilung: **25.04.2018**
(21) Anmeldenummer: 13185145.3
(22) Anmeldetag: 19.09.2013
(51) Int. Cl.: F17C 5/02, B60H 1/32

(54) **Verfahren zum Befüllen eines Kältemitteltanks eines Kühlfahrzeugs sowie Kühlfahrzeug**
Method for filling a coolant tank of a refrigerated vehicle and refrigerated vehicle
Procédé de remplissage d'un réservoir de fluide frigorifique d'un véhicule frigorifique et véhicule frigorifique

(30) Priorität: 19.09.2012 DE 102012018461
(43) Veröffentlichungstag der Anmeldung: 26.03.2014
(73) Patentinhaber: Messer France S.A.S., 92816 Puteaux Cedex (FR)
(72) Erfinder: Hennequin, James, 77410 Annet sur Marne (FR); Frère, Émilien, 77100 Meaux (FR); Henry, Christophe, 77450 Esbly (FR)
(74) Vertreter: Münzel, Joachim R.

(56) Entgegenhaltungen:
- EP-A1- 0 599 626
- DE-A1-102010 020 476
- US-A- 3 803 859
- US-A- 5 916 246
- US-A1- 2011 297 273

## Beschreibung

Die Erfindung betrifft ein Verfahren zum Befüllen eines Kältemitteltanks eines Kühlfahrzeugs mit einem kryogenen Kältemittel nach dem Oberbegriff des Patentanspruchs 1. Die Erfindung betrifft des Weiteren ein zur Durchführung des erfindungsgemäßen Verfahrens geeignetes Kühlfahrzeug.

Zum Transport von temperaturempfindlichen Waren sind Kühlfahrzeuge mit einem Kühlraum ausgerüstet, in dem eine Atmosphäre mit einer Temperatur von z.B. 4°C bis 10°C oder, als Gefriergut, bei Temperaturen unter 0°C aufrecht erhalten wird. Zur Temperierung der Kühlraumatmosphäre kommen häufig noch konventionelle Kühlaggregate zum Einsatz, die jedoch wegen ihrer hohen Lärmemissionen im laufenden Betreib mehr und mehr in die Kritik geraten. Als Alternative bietet sich die Kühlung mittels eines kryogenen Kältemittels an. Das kryogene Kältemittel, beispielsweise flüssiger Stickstoff oder flüssiges Kohlendioxid, wird in einem am Fahrzeug montierten thermisch isolierten Kältemitteltank im flüssigen Zustand bevorratet und bei Bedarf über eine ebenfalls thermisch isolierte Rohrleitung dem Kühlraum zugeführt. Zur Kühlung des Kühlraumes wird das kryogene Kältemittel entweder flüssig oder gasförmig in den Kühlraum eingesprüht (direkte Kühlung) oder über eine Wärmetauscheranordnung mit der Atmosphäre im Kühlraum in indirekten Wärmekontakt gebracht. Kühlfahrzeuge dieser Art sowie Kühlsysteme von Kühlfahrzeugen werden beispielsweise in der DE102010020476 A1, aber auch in der WO 2011/141287 A1, EP 1659355 A2, GB 2275098 A oder der EP 2384916 A2 beschrieben.

Die Befüllung des Kältemitteltanks eines Kühlfahrzeugs erfolgt üblicherweise aus ortsfesten Speicherbehältern, in denen das Kältemittel im tiefkalten Zustand gelagert wird. Da das Kältemittel im ortsfesten Speicherbehälter unter einem höheren Druck gelagert wird, als es dem Fülldruck des Kältemitteltanks entspricht, wird das Kältemittel unter der Wirkung der Druckdifferenz in den Kältemitteltank eingeleitet. Die Verringerung des Drucks bei der Überführung des Kältemittels vom Speicherbehälter zum Kältemitteltank führt zugleich dazu, dass ein Teil des Kältemittels verdampft und in die Umgebung abgelassen wird.

Die bislang bekannten Systeme zielen darauf ab, den Kälteinhalt des im Kältemitteltank gespeicherten flüssigen Kältemittels möglichst weitgehend zur Kühlung des Kühlraums einzusetzen. Erhebliche Kälteverluste treten jedoch bereits bei der Befüllung des Kältemittelstanks auf. Aufgabe der Erfindung ist demnach, die bei der Befüllung des Kältemitteltanks auftretenden Kälteverluste zu minimieren.

Gelöst ist diese Aufgabe durch ein Verfahren mir den Merkmalen des Patentanspruchs 1.

Ein Verfahren zum Befüllen eines Kältemitteltanks eines Kühlfahrzeuges mit einem kryogenen Kältemittel, das zum Kühlen eines Kühlraumes des Kühlfahrzeuges bestimmt ist, aus einem ortfesten Speichertank, bei dem das Kältemittel unter der Wirkung eines Druckunterschieds zwischen Speicherank und Kältemitteltank in den Kältemitteltank eingeleitet wird und dabei ein Teil des Kältemittels verdampft, ist erfindungsgemäß also dadurch gekennzeichnet, dass das bei der Befüllung des Kältemitteltanks verdampfende Kältemittel zumindest teilweise aufgefangen und zur Kühlung des Kühlraums eingesetzt wird.

Wie oben bereits erwähnt verdampft beim Befüllvorgang ein nicht unwesentlicher Teil des Kältemittels bei der Druckerniedrigung während der Befüllung des Kältemitteltanks des Kühlfahrzeugs aus dem Speichertank. Beispielsweise beträgt der Anteil verdampfenden Kältemittels bei einem Druck von 6 bar im Speichertank und 0,7 bar im Kältemitteltank (jeweils Überdruck über Umgebungsatmosphäre) ca. 22 Massen-% des dem Speichertank insgesamt entnommenen Kältemittels. Dieser Anteil wurde bislang ungenutzt in die Umgebung abgeführt. Das erfindungsgemäße Verfahren nutzt zumindest einen Teil der Kälte des verdampfenden Kältemittels zur Kühlung des Kühlraums. In dem Umfang, in dem auf diese Weise kaltes Gas zur Kühlung des Kühlraums eingesetzt wird, kann flüssiges Kältemittel eingespart werden.

Das verdampfte Kältemittel bzw. ein Teil davon wird bevorzugt entweder in den Kühlraum eingeleitet (direkte Kühlung) oder einem im Kühlraum angeordneten Wärmetauscher zugeführt (indirekte Kühlung). Die direkte Kühlung ist mit einem geringeren apparatetechnischen Aufwand verbunden und führt zu geringeren Kälteverlusten, ist jedoch, jedenfalls bei der Wahl von Stickstoff oder Kohlendioxid als Kältemittel, aus sicherheitstechnischen Überlegungen nicht unproblematisch. Bei der indirekten Kühlung kommt zum Wärmetausch mit der Kühlraumatmosphäre entweder ein separater Wärmetauscher zum Einsatz, oder das verdampfte Kältemittel wird durch den gleichen Wärmetauscher geleitet, dem im Betrieb des Kühlfahrzeugs das im Kältemitteltank bevorratete flüssige Kältemittel zugeführt wird.

Eine besonders vorteilhafte Ausführungsform der Erfindung sieht dabei vor, zumindest einen Teil des verdampften Kältemittels zwecks Vorkühlung des Kühlraums diesem bereits vor der Zuladung der während des Transports zu kühlenden Güter zuzuführen, da bereits durch das Abkühlen des Kühlraums auf die Betriebstemperatur (also der Innentemperatur des Kühlraums beim Transport der zu kühlenden Güter) ein beträchtlicher Kühlaufwand zu leisten ist.

Eine andere zweckmäßige Ausgestaltung der Erfindung sieht vor, dass zumindest ein Teil des verdampften Kältemittels dem Kühlraum erst nach der Zuladung zu kühlender Gütern zugeführt wird. In diesem Falle dient die Kühlung durch das verdampfte Kältemittel als zusätzlicher Kälteeintrag, der ergänzend zur regulären Kühlung durch das im Kältemitteltank bevorratete Kältemittel hinzutritt. Dies ist insbesondere vorteilhaft im Falle von zu kühlenden Gütern, die bei der Beladung des Kühlraums noch nicht ihre Transporttemperatur erreicht haben und durch den zusätzlichen Kälteeintrag rasch gekühlt werden können.

Um die Wärmeübertragung vom verdampften Kältemittel auf die Kühlraumatmosphäre zu optimieren ist es zweckmäßig, die Menge und den Fluss des Kältemittels bei der Zuführung an den Kältemitteltank in Abhängigkeit von vorgegebenen oder gemessenen Parametern zu steuern. Als Parameter dienen beispielsweise die Temperatur im Kühlraum und/oder der Druck im Kältemitteltank während der Befüllung.

Ein zur Durchführung des erfindungsgemäßen Verfahrens geeignetes Kühlfahrzeug weist die Markmale des Patentanspruchs 7 auf.

Ausgehend von einem Kühlfahrzeug, das mit einem Kühlraum für während des Transports kühl zu lagernde Güter und mit einem Kältemitteltank ausgerüstet ist, der über eine Kältemittelzuleitung mit dem Kühlraum thermisch verbunden ist und der zwecks Befüllung mit einem ortfesten, mit einem verflüssigten kryogenen Kältemittel gefüllten Speichertank verbindbar ist, ist ein erfindungsgemäßes Kühlfahrzeug dadurch gekennzeichnet, dass eine den Kältemitteltank mit dem Kühlraum des Kühlfahrzeugs thermisch verbindende Gasauslassleitung vorgesehen ist, die oberhalb der bestimmungsgemäßen maximalen Füllhöhe im Kältemitteltank ausmündet.

Bei Kühlfahrzeugen nach dem Stande der Technik dient eine Gasauslassleitung, die oberhalb der maximalen Füllhöhe im Kältemitteltank ausmündet, zum Ableiten des bei der Befüllung entstehenden Gases, um den Druck im Kältemitteltank unterhalb eines bestimmten, vorgegebenen Wertes zu halten. Erfindungsgemäß ist nun eine solche Gasauslassleitung thermisch mit dem Kühlraum verbunden, mündet also im Kühlraum aus oder ist mit einem im Kühlraum angeordneten Wärmetauscher strömungsverbunden. Auf diese Weise wird die Kälte des bei der Befüllung entstehenden Gases zur Kühlung der Kühlraumatmosphäre genutzt.

Im Falle der indirekten Kühlung der Atmosphäre im Kühlraum kommt bevorzugt ein mit der Gasauslassleitung strömungsverbundener Wärmetauscher zum Einsatz, bei dem es sich entweder um einen separaten Wärmetauscher handelt, der für die Gas-Gas-Übertragung von Wärme im Kühlraum spezifiziert ist, oder aber um den gleichen Wärmetauscher, durch dem während des Betriebs des Kühlfahrzeugs, d.h. während des Transports von kühl zu lagernden Gütern, das flüssige Kältemittel aus dem Kältemitteltank geleitet wird.

In einer andren bevorzugten Ausgestaltung der Erfindung zweigt die Gasauslassleitung von einer Überschussgasleitung zum Abführen von beim Befüllen des Kältemitteltanks entstehenden gasförmigen Kältemittels ab. An der Abzweigung ist vorzugsweise ein Dreiwegeventil montiert, mittels dessen in Abhängigkeit von den oben erwähnten Parametern die Zuführung zumindest eines Teilstroms des Gases an den Kühlraum, bzw. den darin montierten Wärmetauscher, und/oder das Abführen des Gases an die Umgebungsatmosphäre unter Umgehung des Kühlraums geregelt werden kann.

### Beispiel:

Ein Kältemitteltank eines Kühlfahrzeuges hat eine Tankkapazität von 650 l und einen Fülldruck von 0,7 bar (Überdruck gegenüber Umgebungsatmosphäre). Der Kältemitteltank wird aus einem Speichertank mit flüssigem Stickstoff befüllt, der bei einem Druck von 4 bar (Überdruck) entnommen wird. Bei der Befüllung wird ca. 15% des Kältemittels verdampft, entsprechend einer Kälteenergie von ca. 11700 kJ, die erfindungsgemäß zumindest teilweise zur Kühlung des Kühlraums eingesetzt wird. Dies entspricht etwa 7,5% der Kälteenergie des flüssigen Stickstoffs im Tank.

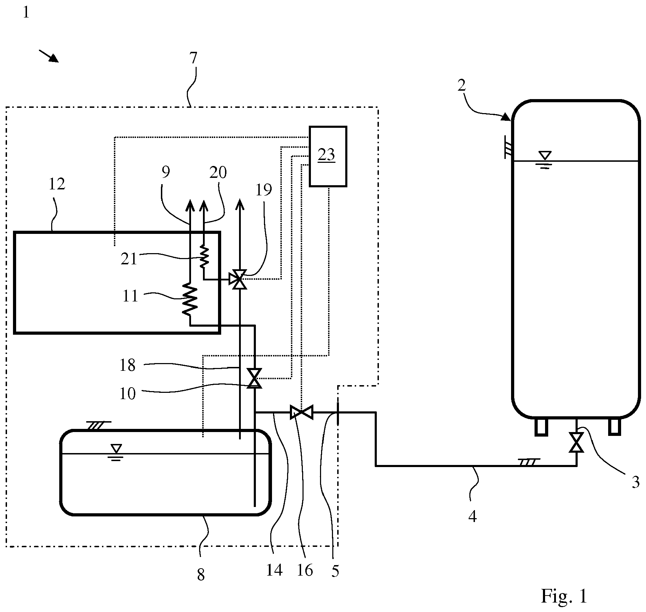

Anhand der Zeichnung soll ein Ausführungsbeispiel der Erfindung näher erläutert werden. Die einzige Zeichnung (Fig. 1) zeigt schematisch eine erfindungsgemäße Anordnung zum Betanken eines Kältemitteltanks eines Kühlfahrzeugs mit einem kryogenen Kältemittel.

Die in der Zeichnung gezeigte Anordnung 1 umfasst einen ortsfesten Speichertank 2 mit isolierten Wänden, in dem ein kryogenes Medium, beispielsweise Stickstoff, im verflüssigten Zustand gespeichert wird. Im Bereich des Bodens des Speichertanks 2 ist ein Entnahmeanschluss 3 vorgesehen, von dem aus eine thermisch isolierte Entnahmeleitung 4 abführt, die an ihrem vom Entnahmeanschluss 3 des Speichertanks 2 entgegen gesetzten Endabschnitt mit einem Füllstutzen 5 zum Anschließen eines zu befüllenden Kältemitteltanks 8 ausgerüstet ist. Der Entnahmeleitung 4 kann im Übrigen in hier nicht gezeigter Weise zumindest an ihrem Endabschnitt im Bereich des Füllstutzens 5 als flexibler Anschlussschlauch ausgebildet sein, um das Anschließen eines Kältemitteltanks 8 eines Kühlfahrzeugs zu erleichtern.

Der zu befüllende Kältemitteltank 8 ist auf einem Kühlfahrzeug montiert, das hier nur durch eine strichpunktierte Linie 7 angedeutet ist. Der thermisch isolierte Kältemitteltank 8 steht über eine Kältemittelzuleitung 9 mit einem Wärmetauscher 11 in Strömungsverbindung, der innerhalb eines Kühlraums 12 aufgenommen ist. Der Kühlraum 12 dient während des Transports zum Lagern des zu kühlenden Gutes bei einer gleichbleibend niedrigen Temperatur von beispielsweise 4°C. Die Kältemittelzuleitung 9 mündet im Bodenbereich des Kältemitteltanks 8 aus, sodass bei befülltem Tank die Kältemittelleitung 9 in der flüssigen Phase des im Kältemitteltank 8 bevorrateten Kältemittels eintaucht. Eine elektronisch ansteuerbare Sperrarmatur 10 ermöglicht das Öffnen bzw. Schließen der Kältemittelleitung 9 in Abhängigkeit von einer im Kühlraum 12 gemessenen Temperatur. Weiterhin zweigt von der Kältemittelzuleitung 9 eine Füllleitung 14 ab, die mit dem Füllstutzen 5 der Entnahmeleitung 4 verbindbar ist und mittels einer Sperrarmatur 16 geöffnet bzw. geschlossen werden kann.

Am Wärmetauscher 11 besteht eine thermische Verbindung zwischen dem Kältemittel aus dem Kältemitteltank 8 mit der Atmosphäre im Innen des Kühlraums 12. Zur Kühlung des Kühlraums 12 wird der Druck im Kältemitteltank 8 durch Verdampfen eines Teils des im Kältemitteltank 8 gespeicherten Kältemittels mittels einer hier nicht gezeigten Heizeinrichtung erhöht, sodass flüssiges Kältemittel aus dem Kältemitteltank 8 in die Kältemittelleitung 9 gedrückt wird und am Wärmetauscher 11 Wärme aus der Kühlraumatmosphäre aufnimmt, wobei es zumindest teilweise verdampft. Das verdampfte und erwärmte Kältemittel wird anschließend abgeführt und beispielsweise in die Umgebungsatmosphäre entlassen. Eine direkte Strömungsverbindung zwischen dem Innern des Kühlraums 12 und der Kältemittelleitung 9 besteht im hier gezeigten Ausführungsbeispiel nicht; gleichwohl sind im Rahmen der Erfindung direkte Kühlsysteme nicht ausgeschlossen, bei denen eine solche Strömungsverbindung besteht.

Vom Kältemitteltank 8 führt des Weiteren eine Gasableitung 18 ab, die innerhalb des Kältemitteltanks 8 in einem oberen Bereich ausmündet, sodass sie bei auch bei bestimmungsgemäß maximalem Füllstand des flüssigen Kältemittels im Kältemitteltank 8 mit der Gasphase des im Kältemitteltank 8 bevorrateten Kältemittels strömungsverbunden ist. An einem Dreiwegeventil 19 in der Gasableitung 18 zweigt eine Kühlgasleitung 20 ab, die mit einem innerhalb des Kühlraums 12 angeordneten Wärmetauscher 21 strömungsverbunden ist, der einen thermischen Kontakt zwischen der Atmosphäre im Kühlraum 12 und dem durch die Kühlgasleitung 20 geführten gasförmigen Kältemittel herstellt. Eine elektronische Steuereinheit 23 steht mit einem Temperatursensor im Kühlraum 12, einem Drucksensor im Kältemitteltank 8 und den Armaturen 10, 16, 19 in Datenverbindung. In einer hier nicht gezeigten Alternative mündet die Kühlgasleitung 20 oder eine von der Kühlgasleitung stromab zum Wärmetauscher 20 abführende Zweigleitung, innerhalb des Kühlraums 12 aus und ermöglicht auf diese Weise eine direkte Kühlung des Kühlraums 12.

Zum Befüllen des Kältemitteltanks 8 wird die Füllleitung 14 mit dem Füllstutzen 5 der Entnahmeleitung 4 verbunden und die Sperrarmatur 16 - ebenso wie die am Entnahmeanschluss 3 des Speichertanks 2 angeordnete Sperrarmatur - geöffnet. Im Speichertank 2 herrscht im Bereich des Entnahmeanschlusses 3 ein Druck von ca. 3 bis 6 bar (Überdruck gegenüber Umgebungsdruck), im Kältemitteltank 8 herrscht dagegen ein maximaler Überdruck von ca. 0,7 bis 2 bar. Aufgrund des Druckunterschiedes strömt flüssiges Kältemittel vom Speichertank 2 in den Kältemitteltank 8 mit einem Strom von beispielsweise 70 bis 90l /min. Aufgrund der Druckerniedrigung beim Füllvorgang verdampft ein Teil des Kältemittels und wird über die Gasableitung 18 abgeführt. Das bei sehr tiefen Temperaturen von weniger als 100 K vorliegende gasförmige Kältemittel wird jedoch nicht direkt ins Freie geleitet, sondern am Dreiwegeventil 19 in die Kühlgasleitung 20 eingeleitet und zum Wärmtauscher 21 transportiert. Am Wärmetauscher 21 kommt das Kältemittelgas mit der Atmosphäre im Kühlraum 12 in thermischen Kontakt und kühlt diese ab. Das gasförmige Kältemittel erwärmt sich dabei und wird erst anschließend in die Umgebung abgeführt. Auf diese Weise wird zumindest ein Teil des Kälteinhalts des bei der Befüllung verdampfenden Kältemittels wirksam genutzt. Die Kühlung mit dem verdampftem Kältemittel kann dabei vor, während oder nach der Befüllung des Kühlraums 12 mit zu kühlenden Gütern erfolgen.

Nach Beendigung des Befüllvorgangs wird die Sperrarmatur 16 - ebenso wie die Sperrarmatur am Entnahmeanschluss 3 - geschlossen und die Füllleitung 14 vom Füllstutzen 5 getrennt. Während des Transports wird der Kühlraum 12 in erster Linie mit flüssigem Kühlmittel aus dem Kühlmitteltank 8 gekühlt. Um eine gleichmäßige Kühlung im Kühlraum 12 zu erzielen kann im Übrigen im Bereich der Wärmetauscher 11, 21 ein Ventilator vorgesehen werden.

### Bezugszeichenliste

- 1.: Anordnung
- 2.: Speichertank
- 3.: Entnahmeanschluss
- 4.: Entnahmeleitung
- 5.: Füllstutzen
- 6.: -
- 7.: Linie
- 8.: Kältemitteltank
- 9.: Kältemittelzuleitung
- 10.: Sperrarmatur
- 11.: Wärmetauscher
- 12.: Kühlraum
- 13.: -
- 14.: Füllleitung
- 15.: -
- 16.: Sperrarmatur
- 17.: -
- 18.: Gasableitung
- 19.: Dreiwegeventil
- 20.: Kühlgasleitung
- 21.: Wärmetauscher
- 22.: -
- 23.: Steuereinheit

## Patentansprüche

1. Verfahren zum Befüllen eines Kältemitteltanks (8) eines Kühlfahrzeugs mit einem kryogenen Kältemittel, das zum Kühlen eines Kühlraumes (12) des Kühlfahrzeug bestimmt ist, bei dem das Kältemittel im verflüssigten Zustand aus einem ortsfesten Speichertank (2) unter der Wirkung eines Druckunterschieds zwischen Speichertank (2) und Kältemitteltank (8) in den Kältemitteltank (8) eingeleitet wird und dabei ein Teil des Kältemittels verdampft,
**dadurch gekennzeichnet,**
**dass** das bei der Befüllung des Kältemitteltanks (8) verdampfende Kältemittel zumindest teilweise aufgefangen und zur Kühlung des Kühlraums (12) eingesetzt wird.

2. Verfahren nach Anspruch 1, **dadurch gekennzeichnet, dass** zumindest ein Teil des verdampften Kältemittels dem Kühlraum (12) in direkter Kühlung zugeführt wird.

3. Verfahren nach Anspruch 1 oder 2, **dadurch gekennzeichnet, dass** zumindest ein Teil des verdampften Kältemittels zum Kühlen des Kühlraums (12) einem im Kühlraum angeordneten Wärmetauscher (21) zugeführt wird.

4. Verfahren nach einem der vorhergehenden Ansprüche, **dadurch gekennzeichnet, dass** zumindest ein Teil des verdampften Kältemittels zwecks Vorkühlung des Kühlraums (12) diesem vor der Zuladung zu kühlender Güter zugeführt wird.

5. Verfahren nach einem der vorhergehenden Ansprüche, **dadurch gekennzeichnet, dass** zumindest ein Teil des verdampften Kältemittels dem Kühlraum (12) nach der Zuladung zu kühlender Gütern zugeführt wird.

6. Verfahren nach einem der vorhergehenden Ansprüche, **dadurch gekennzeichnet, dass** die Zuführung des Kältemittels an den Kältemitteltank (8) in Abhängigkeit von vorgegebenen oder gemessenen Parametern gesteuert wird.

7. Kühlfahrzeug, mit einem Kühlraum (12) für während des Transports kühl zu lagernde Güter, und einem Kältemitteltank (8), der über eine Kältemittelzuleitung (9) mit dem Kühlraum (12) thermisch verbunden ist und der zwecks Befüllung mit einem ortfesten Speichertank (2) für ein flüssiges kryogenes Kältemittel verbindbar ist, **dadurch gekennzeichnet, dass** eine den Kältemitteltank (8) mit dem Kühlraum (12) des Kühlfahrzeugs thermisch verbindende Gasauslassleitung (20) vorgesehen ist, die oberhalb der bestimmungsgemäßen maximalen Füllhöhe im Kältemitteltank (8) ausmündet.

8. Kühlfahrzeug nach Anspruch 7, **dadurch gekennzeichnet, dass** die Gasauslassleitung (20) von einer Überschussgasleitung (18) zum Abführen von beim Befüllen des Kältemitteltanks (8) entstehenden gasförmigen Kältemittels abzweigt.

9. Kühlfahrzeug nach Anspruch 7 oder 8, **dadurch gekennzeichnet, dass** im Kühlraum (12) ein mit der Gasauslassleitung (20) strömungsverbundener Wärmetauscher (21) vorgesehen ist.

## Claims

1. Method for filling a refrigerant tank (8) of a refrigerated vehicle with a cryogenic refrigerant which is intended for cooling a cooling compartment (12) of the refrigerated vehicle, in which method the refrigerant is introduced in the liquefied state from a static storage tank (2) into the refrigerant tank (8) under the action of a pressure difference between storage tank (2) and refrigerant tank (8), and in the process a part of the refrigerant evaporates,
**characterized**
**in that** the refrigerant that evaporates during the filling of the refrigerant tank (8) is at least partially captured and used for the cooling of the cooling compartment (12).

2. Method according to Claim 1, **characterized in that** at least a part of the evaporated refrigerant is supplied to the cooling compartment (12) in a direct cooling configuration.

3. Method according to Claim 1 or 2, **characterized in that** at least a part of the evaporated refrigerant is supplied, for the purposes of cooling the cooling compartment (12), to a heat exchanger (21) arranged in the cooling compartment.

4. Method according to one of the preceding claims, **characterized in that** at least a part of the evaporated refrigerant is, for the purposes of pre-cooling the cooling compartment (12), supplied to said cooling compartment before the loading of items for cooling.

5. Method according to one of the preceding claims, **characterized in that** at least a part of the evaporated refrigerant is supplied to the cooling compartment (12) after the loading of items for cooling.

6. Method according to one of the preceding claims, **characterized in that** the supply of the refrigerant to the refrigerant tank (8) is controlled in a manner dependent on predefined or measured parameters.

7. Refrigerated vehicle, having a cooling compartment (12) for items that are to be kept cool during transport, and having a refrigerant tank (8) which is thermally connected to the cooling compartment (12) via a refrigerant feed line (9) and which, for the purposes of being filled, is connectable to a static storage tank (2) for a liquid cryogenic refrigerant, **characterized in that** a gas outlet line (20) is provided which thermally connects the refrigerant tank (8) to the cooling compartment (12) of the refrigerated vehicle and which opens out in the refrigerant tank (8) above the intended maximum fill level.

8. Refrigerated vehicle according to Claim 7, **characterized in that** the gas outlet line (20) branches off from an excess gas line (18) for discharging gaseous refrigerant that forms during the filling of the refrigerant tank (8).

9. Refrigerated vehicle according to Claim 7 or 8, **characterized in that**, in the cooling compartment (12), there is provided a heat exchanger (21) which is connected in terms of flow to the gas outlet line (20).

## Revendications

1. Procédé de remplissage d'un réservoir de fluide frigorigène (8) d'un véhicule frigorifique comprenant un fluide frigorigène cryogénique qui est prévu pour refroidir un espace frigorifique (12) du véhicule frigorifique, dans lequel le fluide frigorigène est introduit à l'état liquéfié dans le réservoir de fluide frigorigène (8) depuis un réservoir de stockage fixe (2) sous l'effet d'une différence de pression entre le réservoir de stockage (2) et le réservoir de fluide frigorigène (8), et une partie du liquide frigorigène s'évapore,
**caractérisé en ce que**
le fluide frigorigène s'évaporant lors du remplissage du réservoir de fluide frigorigène (8) est au moins en partie recueilli et utilisé pour le refroidissement de l'espace frigorifique (12).

2. Procédé selon la revendication 1, **caractérisé en ce qu'**au moins une partie du fluide frigorigène évaporé est acheminée à l'espace frigorifique (12) par refroidissement direct.

3. Procédé selon la revendication 1 ou 2, **caractérisé en ce qu'**au moins une partie du fluide frigorigène évaporé est acheminée à un échangeur de chaleur (21) disposé dans l'espace frigorifique pour le refroidissement de l'espace frigorifique (12).

4. Procédé selon l'une quelconque des revendications précédentes, **caractérisé en ce qu'**au moins une partie du fluide frigorigène évaporé, en vue du pré-refroidissement de l'espace frigorifique (12), est acheminée à celui-ci avant le chargement de marchandises à refroidir.

5. Procédé selon l'une quelconque des revendications précédentes, **caractérisé en ce qu'**au moins une partie du fluide frigorigène évaporé est acheminée à l'espace frigorifique (12) après le chargement de marchandises à refroidir.

6. Procédé selon l'une quelconque des revendications précédentes, **caractérisé en ce que** l'acheminement du fluide frigorigène au réservoir de fluide frigorigène (8) est commandé en fonction de paramètres prédéfinis ou mesurés.

7. Véhicule frigorifique, comprenant un espace frigorifique (12) pour des marchandises à stocker à l'état refroidi pendant le transport, et un réservoir de fluide frigorigène (8) qui est connecté thermiquement par le biais d'une conduite d'alimentation en fluide frigorigène (9) à l'espace frigorifique (12) et qui peut être connecté à un réservoir de stockage fixe (2) pour un fluide frigorigène cryogénique liquide en vue du remplissage, **caractérisé en ce qu'**une conduite de sortie de gaz (20) reliant thermiquement le réservoir de fluide frigorigène (8) à l'espace frigorifique (12) du véhicule frigorifique est prévue, laquelle débouche au-dessus de la hauteur de remplissage maximale conforme prescrite dans le réservoir de fluide frigorigène (8).

8. Véhicule frigorifique selon la revendication 7, **caractérisé en ce que** la conduite de sortie de gaz (20) part d'une conduite de gaz en excès (18) pour évacuer du fluide frigorigène sous forme gazeuse généré lors du remplissage du réservoir de fluide frigorigène (8).

9. Véhicule frigorifique selon la revendication 7 ou 8, **caractérisé en ce que** dans l'espace frigorifique (12) est prévu un échangeur de chaleur (21) connecté fluidiquement à la conduite de sortie de gaz (20).
